# EUROPEAN PATENT APPLICATION

(11) **EP 4 851 687 A1**
(43) Date of publication of application: **09.12.2026**
(21) Application number: 24919152.9
(22) Date of filing: 31.01.2024
(51) Int. Cl.: G02B 6/44

(54) **OPTICAL FIBER RIBBON AND METHOD FOR MANUFACTURING OPTICAL FIBER RIBBON**

(71) Applicant: SWCC Corporation, Kawasaki-shi, Kanagawa 210-0024 (JP)
(72) Inventor: NAGAI, Takeshiro, Kawasaki-shi, Kanagawa 210-0024 (JP); YAMAMOTO, Takehiko, Kawasaki-shi, Kanagawa 210-0024 (JP); NORO, Wataru, Kawasaki-shi, Kanagawa 210-0024 (JP); TOMONARI, Hiroyuki, Kawasaki-shi, Kanagawa 210-0024 (JP)
(74) Representative: Hasegawa, Kan
(86) International application number: PCT/JP2024/003077
(87) International publication number: WO 2025/163810

(57) **Abstract**

An optical fiber ribbon includes a plurality of single-core coated optical fibers that are arranged in parallel and coated with a resin, and a plurality of connection portions that are each disposed between adjacent single-core coated optical fibers and that each partially connect the adjacent single-core coated optical fibers. In a cross section that is of a region where the connection portion is not disposed and that is orthogonal to the longitudinal direction of the single-core coated optical fiber, a ratio of the longest length to the shortest length in the cross section of the single-core coated optical fiber is in a range of 1.02 to 1.14.

## Description

### Technical Field

The present invention relates to an optical fiber ribbon and a method for producing an optical fiber ribbon.

### Background Art

In recent years, the spread of the Internet of Things (IoT), the full-scale commercial launch of 5G, and the development of autonomous driving of automobiles have led to a dramatic increase in data traffic. Consequently, there is a growing demand for the development and construction of high-speed, large-capacity optical fiber communication networks to support this increase. In order to economically achieve the development and construction of the high-speed and large-capacity optical fiber communication network, it is important to accommodate more single-core coated optical fibers (optical fibers) in existing ducts.

In this way, when a large number of single-core coated optical fibers are accommodated in the existing ducts, from the viewpoint of workability of wiring installation work, a rollable ribbon in which single-core coated optical fibers are intermittently connected is used (see, for example, Patent Literature (hereinafter, referred to as PTL) 1).

PTL 1 discloses an optical fiber ribbon including a plurality of optical fiber cores disposed in parallel and an inter-core connection portion that intermittently connects adjacent optical fiber cores to each other. In the method for producing the optical fiber ribbon disclosed in PTL 1, first, a plurality of optical fiber cores are disposed in a row at predetermined spacings. Next, a taping resin is applied to cover the entire periphery of the plurality of optical fiber cores, and then the taping resin between the adjacent optical fiber cores is partially removed while the taping resin is in a state before being cured. Finally, the taping resin is cured to produce the optical fiber ribbon. The produced optical fiber ribbon is covered with a substantially uniform and thick taping resin.

### Citation List

### Patent Literature

PTL 1
Japanese Patent Application Laid-Open No. 2012-108331

### Summary of Invention

### Technical Problem

However, since the amount of the taping resin is large in the optical fiber ribbon disclosed in PTL 1, resin removability during use is reduced.

An object of the present invention is to provide an optical fiber ribbon having high resin removability and a method for producing the optical fiber ribbon.

### Solution to Problem

In order to achieve the above object, one aspect of the present invention provides the following:
An optical fiber ribbon including:
a plurality of single-core coated optical fibers that are disposed in parallel and coated with a resin; and
a plurality of connection portions that are each disposed between adjacent single-core coated optical fibers among the plurality of single-core coated optical fibers and that each partially connect the adjacent single-core coated optical fibers, in which
in a cross section of a region where the plurality of connection portions are not disposed, a ratio of a longest length to a shortest length in the cross section for each of the plurality of single-core coated optical fibers is in a range of 1.02 to 1.14, the cross section being orthogonal to a longitudinal direction of each of the plurality of single-core coated optical fibers.

Another aspect of the present invention provides the following:
A method for producing an optical fiber ribbon, the method including:
disposing a plurality of single-core coated optical fibers in parallel;
applying an uncured photocurable resin to the plurality of single-core coated optical fibers to form an uncured tape layer, the uncured photocurable resin being applied in a tape shape;
forming a plurality of connection portions that each partially connect adjacent single-core coated optical fibers among the plurality of single-core coated optical fibers and a separation portion that separates the adjacent single-core coated optical fibers, the forming being performed by rotating a rotary blade with respect to the uncured tape layer or inserting and pulling out a needle with respect to the uncured tape layer; and
curing the uncured tape layer by irradiating the uncured tape layer with light, in which
in the forming the plurality of connection portions and the separation portion, a distance between the rotary blade or the needle and each of the plurality of single-core coated optical fibers is in a range of 0 to 10 µm.

### Advantageous Effects of Invention

The present invention is capable of providing an optical fiber ribbon having high resin removability and a method for producing the optical fiber ribbon.

### Brief Description of the Drawings

FIGS. 1A to 1C illustrate an optical fiber ribbon according to a preferred embodiment of the present invention;
FIG. 2 is a schematic view for describing a shortest length and a longest length in a cross section of an optical fiber;
FIG. 3 is a flowchart of a method for producing an optical fiber ribbon;
FIG. 4 illustrates a schematic configuration of an apparatus for producing an optical fiber ribbon;
FIGS. 5A to 5C are side views illustrating a schematic configuration of rotary blades of a separating die;
FIG. 6 is a side view schematically illustrating a state of rotation of the rotary blades;
FIG. 7 is a view for describing a step of forming a connection portion and a separation portion; and
FIG. 8 illustrates a schematic configuration of an apparatus for producing an optical fiber ribbon according to a variation.

### Description of Embodiments

Hereinafter, an optical fiber ribbon and a method for producing an optical fiber ribbon according to a preferred embodiment of the present invention will be described. In the present specification, with respect to the description of "to" indicating a numerical range, the lower limit value and the upper limit value are included in the numerical range.

### (1) Configuration of Optical fiber ribbon

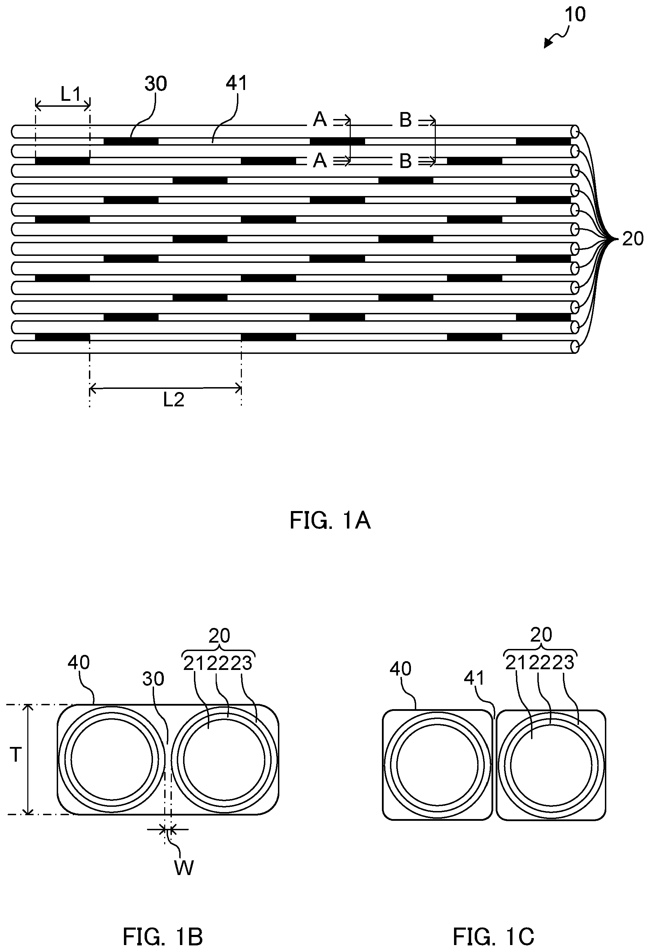

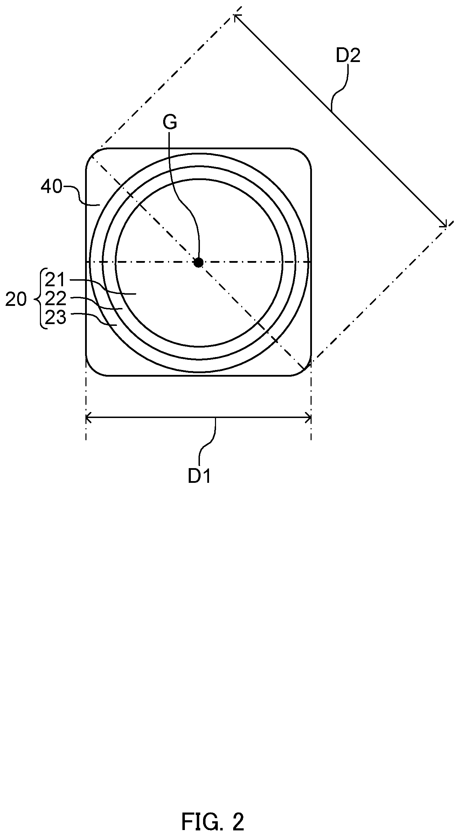

FIG. 1A is a schematic plan view of optical fiber ribbon 10, FIG. 1B is a cross-sectional view taken along line A-A in FIG. 1A, and FIG. 1C is a cross-sectional view taken along line B-B in FIG. 1A. FIG. 2 is a schematic view for describing shortest length D1 and longest length D2 in a cross section of optical fiber 20.

Optical fiber ribbon 10 includes a plurality of single-core coated optical fibers (hereinafter, each also simply referred to as "optical fiber") 20 and a plurality of connection portions 30. Optical fiber ribbon 10 may include a plurality of separation portions 41. As illustrated in FIGS. 1A to 1C, optical fiber ribbon 10 according to the present embodiment includes a plurality of single-core coated optical fibers 20, a plurality of connection portions 30, and a plurality of separation portions 41.

The plurality of optical fibers 20 are disposed in parallel. The number of optical fibers 20 is not particularly limited as long as it is two or more. The number of optical fibers 20 included in one optical fiber ribbon 10 is appropriately selected according to the application of optical fiber ribbon 10. The number of optical fibers 20 included in one optical fiber ribbon 10 is approximately 2 to 12.

In the present embodiment, twelve optical fibers 20 are disposed in parallel in one optical fiber ribbon 10.

As illustrated in FIGS. 1B and 1C, optical fiber 20 includes optical fiber strand 21, primary coating layer 22, and secondary coating layer 23. As optical fiber strand 21, primary coating layer 22, and secondary coating layer 23, the same components as an optical fiber strand and a first coating layer and a second coating layer of a known optical fiber can be used. Further, a colored layer may be formed on secondary coating layer 23 of optical fiber 20. In one optical fiber ribbon 10, it is preferable that colors of the colored layers of the plurality of optical fibers 20 are different from each other. This configuration makes it possible to identify a plurality of optical fibers 20 within one optical fiber ribbon 10.

In the present embodiment, tape layer 40 is further disposed around the plurality of optical fibers 20, and adjacent optical fibers 20 are intermittently connected by tape layer 40.

In the present embodiment, a region where adjacent optical fibers 20 are partially connected is connection portion 30, and a region where adjacent optical fibers 20 are partially separated is separation portion 41.

Connection portions 30 are disposed between all adjacent optical fibers 20, and each connection portion partially connects adjacent optical fibers 20. Separation portions 41 are disposed between all adjacent optical fibers 20, and each separation portion partially separates adjacent optical fibers 20. The disposition of connection portion 30 and separation portion 41 is not particularly limited.

In optical fiber ribbon 10 according to the present embodiment, connection portions 30 and separation portions 41 are alternately disposed in a longitudinal direction of optical fiber ribbon 10. In addition, in optical fiber ribbon 10, it is preferable that two or more separation portions 41 are disposed between adjacent connection portions 30 in a short direction of optical fiber ribbon 10 (arrangement direction of optical fibers 20). In optical fiber ribbon 10 according to the present embodiment, two separation portions 41 are disposed between adjacent connection portions 30 in the short direction of optical fiber ribbon 10 (arrangement direction of optical fibers 20). In this manner, the number of connection portions 30 can be reduced, and the overall width of optical fiber ribbon 10 can be shortened. With optical fiber ribbon 10, it is possible to satisfy the IEC standard (IEC 60794-1-31:2018, JIS C 6838:2020) or the Telcordia standard (Telcordia GR-20). In addition, it is preferable that separation portions 41 are disposed in such a way that adjacent separation portions 41 partially overlap each other in the short direction of optical fiber ribbon 10.

As illustrated in FIGS. 1A and 1B, length L1 of connection portion 30 in a plan view of optical fiber ribbon 10 is not particularly limited, but is, for example, in a range of 5 mm or more and 15 mm or less. In addition, thickness T of connection portion 30 is not particularly limited, but is, for example, in a range of 0.26 mm or more and 0.29 mm or less. When length L1 and thickness T of connection portion 30 are in the above ranges, the strength of connection portion 30 is high, and connection portion 30 is less likely to be torn even when optical fiber ribbon 10 is wound along the longitudinal direction or twisted as necessary.

In addition, length L2 of separation portion 41 in the plan view of optical fiber ribbon 10 is not particularly limited, but is, for example, in a range of 45 mm or more and 55 mm or less. When length L2 of separation portion 41 is in the above range, it is easy to wind optical fiber ribbon 10 along the longitudinal direction or twist optical fiber ribbon 10 for housing optical fiber ribbon 10 in a cable.

In the present embodiment, length L1 and thickness T of connection portion 30 and length L2 of separation portion 41 are average values obtained from the measurements at random five locations in optical fiber ribbon 10.

As illustrated in FIG. 1C and FIG. 2, in a cross section of a region where connection portion 30 is not disposed-the cross section orthogonal to the longitudinal direction of optical fiber 20, a ratio of longest length D2 to shortest length D1 (that is, D2/D1) in the cross section is in a range of 1.02 to 1.14, and more preferably in a range of 1.07 to 1.14. In the present embodiment, the shape of the cross section is not a substantially circular shape but a substantially rectangular shape. Shortest length D1 in the cross section means a length of the shortest line segment among line segments connecting any two points on an outer edge portion of the cross section and center of gravity G of the cross section. In the present embodiment, it is preferable that shortest length D1 in the cross section is a length in a direction along the disposition direction of the plurality of optical fibers 20. In addition, longest length D2 in the cross section means a length of the longest line segment among the line segments connecting any two points on the outer edge portion of the cross section. In the present embodiment, the line segment corresponding to longest length D2 is a line segment inclined by approximately 45° with respect to the line segment corresponding to shortest length D1. The line segment corresponding to longest length D2 may or may not pass through the center of gravity G in the cross section. In the present embodiment, the line segment corresponding to longest length D2 passes through center of gravity G.

### (2) Method for producing optical fiber ribbon

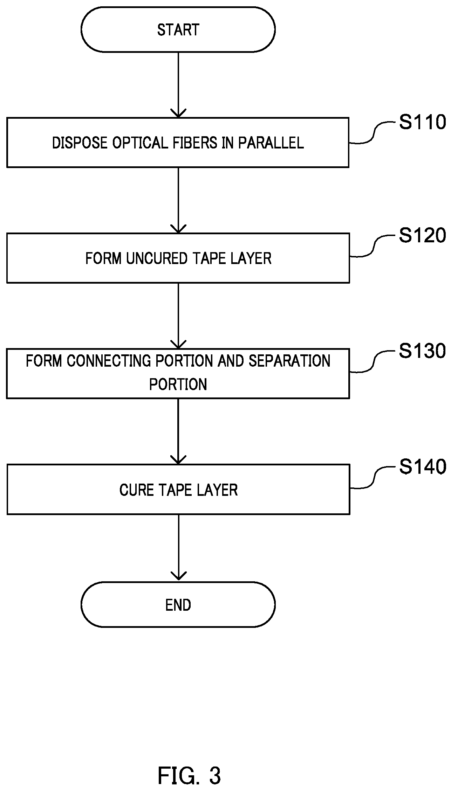

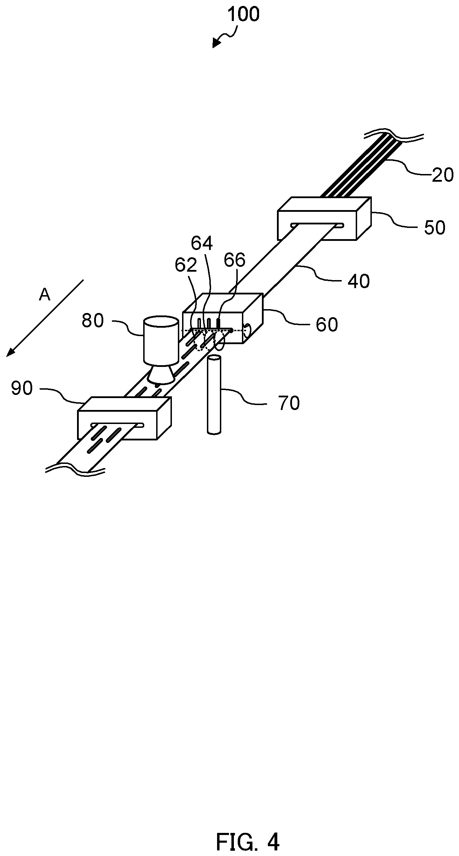

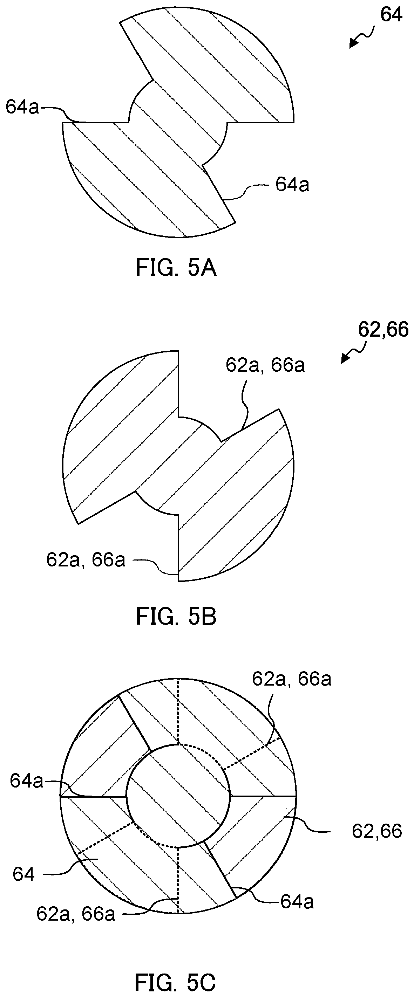

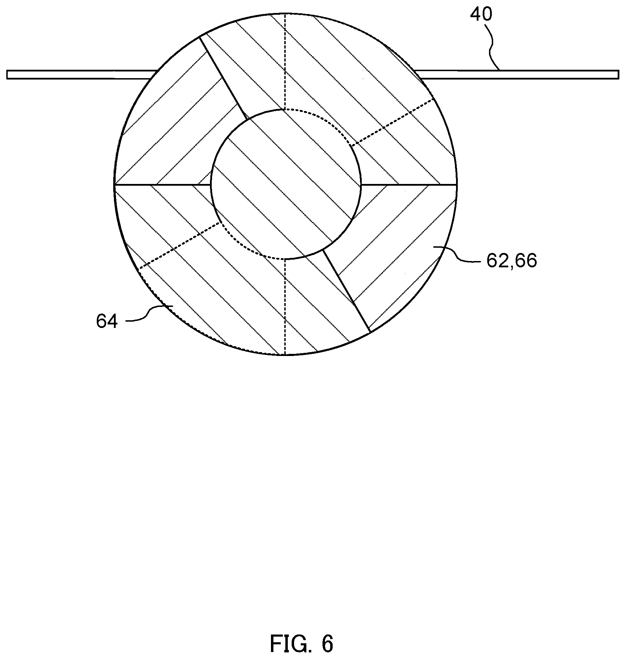

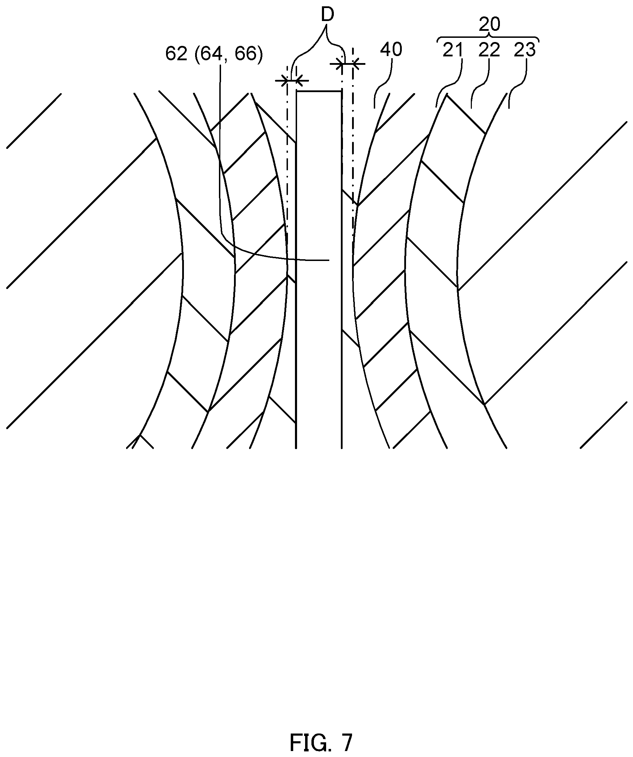

Next, a method for producing optical fiber ribbon 10 will be described. FIG. 3 is a flowchart for optical fiber ribbon 10. FIG. 4 is a perspective view of producing apparatus 100 for producing optical fiber ribbon 10. FIGS. 5A to 5C are side views illustrating a schematic configuration of rotary blades of a separating die. FIG. 6 is a side view schematically illustrating a state of rotation of the rotary blades. FIG. 7 is a view for describing a step of forming connection portion 30 and separation portion 41.

As illustrated in FIG. 3, the method for producing optical fiber ribbon 10 according to the present embodiment includes a step (S110) of disposing the optical fibers in parallel, a step (S120) of forming an uncured tape layer, a step (S130) of forming connection portion 30 and separation portion 41, and a step (S140) of curing the uncured tape layer.

In the step (S110) of disposing the optical fibers in parallel, above-described optical fibers 20 are disposed in parallel. Optical fiber 20 may be a commercially available product or may be produced.

In the step (S120) of forming the uncured tape layer, an uncured tape layer 40 is formed using, for example, producing apparatus 100 illustrated in FIG. 4.

Specifically, while conveying the plurality of optical fibers 20 in a conveyance direction A, an uncured photocurable resin is applied in a tape shape to the plurality of optical fibers 20 by tape die 50, thereby forming tape layer 40.

In the step (S130) of forming connection portion 30 and separation portion 41, connection portion 30 and separation portion 41 are formed using, for example, producing apparatus 100 illustrated in FIG. 4.

Specifically, rotary blades 62, 64, and 66 of separating die 60 are rotated with respect to tape layer 40 to remove parts of tape layer 40, thereby forming connection portions 30 and separation portions 41. In separating die 60, a plurality of rotary blades 62, 64, and 66 are installed at the outlet surface of optical fiber 20. The rotation of each of rotary blades 62, 64, and 66 is controlled by a motor so that the rotary blade rotates in accordance with the conveyance of optical fiber 20, and the rotation axes of rotary blades 62, 64, and 66 coincide with each other.

As illustrated in FIG. 5A, notched portion 64a is formed in rotary blade 64 located at the center, and as illustrated in FIG. 5B, notched portions 62a and 66a are formed in rotary blades 62 and 66 located on the both sides. As illustrated in FIG. 5C, notched portion 64a of rotary blade 64 located at the center is in a different phase from notched portions 62a and 66a of rotary blades 62 and 66 located on the both sides.

In the step (S130) of forming connection portion 30 and separation portion 41, as illustrated in FIG. 6, when each of rotary blades 62, 64, and 66 rotates while following the conveyance of optical fiber 20, rotary blades 62, 64, and 66 rotate with the phase of notched portion 64a of rotary blade 64 at the center remaining in a different phase from the phases of notched portions 62a and 66a of rotary blades 62 and 66 on the both sides, thereby alternately forming separation portion 4 and connection portion 3.

In FIGS. 4 to 6, three rotary blades 62, 64, and 66 are drawn for easy understanding of the explanation, but eleven rotary blades are required in order to produce optical fiber ribbon 10 illustrated in FIG. 1.

As illustrated in FIG. 7, distance D from rotary blades 62, 64, and 66 to optical fiber 20 is preferably in a range of 0 to 10 µm and more preferably in a range of 0 to 5 µm. In this way, by reducing the distance from rotary blades 62, 64, and 66 to optical fiber 20, tape layer 40 formed on the side surface of optical fiber 20 can be made thin. As a result, the resin removability, which will be described below, is high, and the above-described IEC standard or Telcordia standard can be satisfied. In this case, the excess photocurable resin is suctioned and collected by resin suction apparatus 70.

In the step (S140) of curing the uncured tape layer, tape layer 40 is irradiated with light using light irradiation apparatus 80 to semi cure the uncured tape layer, and the semicured tape layer is completely cured by further irradiating the tape layer with light using light irradiation apparatus 90.

For first light irradiation apparatus 80 on the upstream side and second light irradiation apparatus 90 on the downstream side, integrated irradiation amounts are adjusted in such a way that the integrated irradiation amount of first light irradiation apparatus 80 is smaller and the integrated irradiation amount of second light irradiation apparatus 90 is larger. Since distance D from rotary blades 62, 64, and 66 of separating die 60 to optical fiber 20 is in a range of 0 to 10 µm, the amount of the photocurable resin applied to optical fiber 20 is small, and the uncured photocurable resin does not move to surround optical fiber 20 from the step (S130) of forming connection portion 30 and separation portion 41 until the uncured photocurable resin is cured. As a result, in a cross section of a region where connection portion 30 is not disposed (the cross section being orthogonal to the longitudinal direction of optical fiber 20), the ratio of the longest length to the shortest length in the cross section is in a range of 1.02 to 1.14.

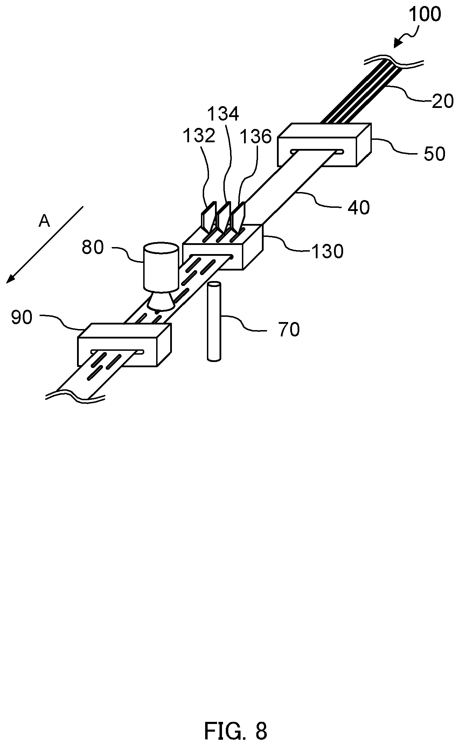

In the step (S130) of forming connection portion 30 and separation portion 41, separating die 130 illustrated in FIG. 8 may be used instead of separating die 60 illustrated in FIG. 4, and needles 132, 134, and 136 of separating die 130 may be inserted into and pulled out of tape layer 40 by controlling to raise and lower needles 132, 134, and 136, thereby removing parts of tape layer 40 to form connection portions 30 and separation portions 41. In this case as well, distance D from needles 132, 134, and 136 to optical fiber 20 is preferably in a range of 0 to 10 µm and more preferably in a range of 0 to 5 µm.

### (Effect)

As described above, according to the present invention, since the ratio of the longest length to the shortest length in the cross section of optical fiber 20 is within a predetermined range, tape layer 40 in the short direction of optical fiber 20 in the region where connection portion 30 is not disposed becomes thin. As a result, the resin removability is improved, and optical fiber ribbon 10 that meets the width-related requirements of various international standards can be obtained.

### Examples

Hereinafter, the present invention will be described in more detail with reference to Examples.

However, the scope of the present invention is not limited in any way by these examples, and the embodiments can be modified without departing from the spirit of the present invention.

### (1) Preparation of sample

Single-core coated optical fibers each having an outer diameter of 250 µm were prepared (step of disposing the optical fibers in parallel) as follows: each single-core coated optical fiber was obtained by applying a primary coating consisting of a urethane acrylate-based photocurable resin and a secondary coating consisting of a urethane acrylate-based photocurable resin to a quartz glass-based SM optical fiber having an outer diameter of 125 µm.

Thereafter, using the producing apparatus illustrated in FIG. 4, the tape layer was formed by applying the urethane acrylate-based photocurable resin while aligning 12 single-core coated optical fibers (step of forming the uncured tape layer).

Thereafter, the rotary blades were rotated to form connection portions and separation portions (step of forming the connection portion and the separation portion). Here, the length of the connection portion was designed as 10 mm, and the length of the separation portion was designed as 50 mm. The distance between the rotary blade and the single-core coated optical fiber in the step of forming the connection portion and the separation portion was as shown in Table 1.

Thereafter, the uncured photocurable resin was cured by the light irradiation apparatus on the upstream side and the light irradiation apparatus on the downstream side to obtain an optical fiber ribbon (step of curing the uncured photocurable resin).

### (2) Evaluation of sample

### (2.1) Visual evaluation of tape structure

In each sample, using a ruler, it was measured whether or not the connection portion and the separation portion between the optical fibers were produced in accordance with the designed values. The measurement results are shown in Table 1. In Table 1, the criteria of ○, △, and × were as follows.
○: The design value was satisfied (the error was within 10%)
△: The error with respect to the design value was more than 10%
×: The separation portion was not formed

### (2.2) Evaluation of resin removability

The optical fibers were individually separated from the optical fiber ribbon using a brush with a bristle hardness of 60 N/cm² or less as specified in JIS S 3061:1995 in a room temperature (23°C) environment. Next, the individually separated optical fiber was wiped with a commercially available resin removal tool (pulled while rubbing in one direction from the back side to the front side). In this manner, the number of times of wiping required to remove the tape layer from the surface of the optical fiber was obtained. Here, for each sample, this test was carried out 32 times (n = 32), and an average value of the number of times of wiping was calculated. The resin removability was evaluated according to the following criteria based on the calculation results.
○: The number of times of wiping was less than 5
△: The number of times of wiping was 5 times or more and less than 10 times
×: The number of times of wiping was 10 times or more

### (2.3) Evaluation of standard compliance

For each sample, it was investigated whether or not the sample was compliant with the IEC standard (IEC 60794-1-31: 2018) and the Telcordia standard (Telcordia GR-20). Specifically, for the IEC standard, it was investigated whether or not the width of the optical fiber ribbon was 3.4 mm or less, and for the Telcordia standard, it was investigated whether or not the width of the optical fiber ribbon was 3.27 mm or less, and the standard compliance was evaluated according to the following criteria.
∘: Compliant with the standard
×: Not compliant with the standard

Table 1 shows the optical fiber ribbon No., the distance between the rotary blade and the single-core coated optical fiber, the ratio of the longest length to the shortest length in the cross section orthogonal to the longitudinal direction of the optical fiber, and each evaluation result.

**[Table 1]**

| Classification | No. | Distance (mm)^{*1} | Longest length (mm) | Shortest length (mm) | Ratio ^{*2} | Tape structure | Resin removability | Standard compliance | | Comprehensive evaluation |
|---|---|---|---|---|---|---|---|---|---|---|
| | | | | | | | | IEC | Telcordia GR-20 | |
| Example | 1 | 0 | 0.28 | 0.246 | 1.14 | ○ | ○ | ○ | ○ | ○ |
| Example | 2 | 5 | 0.28 | 0.260 | 1.07 | ○ | ○ | ○ | ○ | ○ |
| Example | 3 | 10 | 0.28 | 0.275 | 1.02 | ○ | △ | ○ | ○ | ○ |
| Comparative Example | 4 | 15 | 0.28 | 0.278 | 1.01 | △ | △ | ○ | × | × |
| Comparative Example | 5 | 20 | - | - | - | × | - | - | - | × |
| Comparative Example | 6 | 25 | - | - | - | × | - | - | - | × |

| | | | | | | | | | | |
|---|---|---|---|---|---|---|---|---|---|---|
| *1: A distance between the rotary blade and the single-core coated optical fiber. *2: A ratio of the longest length to the shortest length in the cross section orthogonal to the longitudinal direction of the optical fiber. In this case, the ratio is the average value of the ratio measured at 30 points in an arbitrary section in 2 m. | | | | | | | | | | |

As shown in Table 1, Example samples 1 to 3, in which the ratio of the longest length to the shortest length in the cross section orthogonal to the longitudinal direction of the optical fiber was in a range of 1.02 to 1.14, exhibited satisfactory results for all of the tape structure, the resin removability, and the standard compliance. The reason for the satisfactory results is considered that the tape layer covering the optical fiber was thin in some areas. In particular, in the samples of Example 1 and 2 in which the ratio was in a range of 1.07 to 1.14, the resin removability was further improved.

On the other hand, in the sample of Comparative Example 4 in which the ratio was not in the predetermined range, the standard compliance was poor. The reason for the poor results is considered that the tape layer covering the optical fiber is thick. In the samples of Comparative Example 5 and 6, the distance between the rotary blade and the single-core coated optical fiber was excessively large (the clearance was large), the excess photocurable resin was gathered over the optical fibers (without being separated), and the desired connection portion and separation portion were not formed.

### Industrial Applicability

The optical fiber ribbon according to the present invention is useful for, for example, optical fibers used in a high-speed large-capacity optical fiber communication network.

### Reference Signs List

10 Optical fiber ribbon
20 Single-core coated optical fiber
21 Optical fiber strand
22 Primary coating layer
23 Secondary coating layer
30 Connection portion
40 Tape layer
41 Separation portion
50 Tape die
60, 130 Separating die
62, 64, 66 Rotary blade
70 Resin suction apparatus
80 First light irradiation apparatus
90 Second light irradiation apparatus
100 Producing apparatus
132, 134, 136 Needle

## Claims

1. An optical fiber ribbon comprising:
a plurality of single-core coated optical fibers that are disposed in parallel and coated with a resin; and
a plurality of connection portions that are each disposed between adjacent single-core coated optical fibers among the plurality of single-core coated optical fibers and that each partially connect the adjacent single-core coated optical fibers, wherein
in a cross section of a region where the plurality of connection portions are not disposed, a ratio of a longest length to a shortest length in the cross section for each of the plurality of single-core coated optical fibers is in a range of 1.02 to 1.14, the cross section being orthogonal to a longitudinal direction of each of the plurality of single-core coated optical fibers.

2. The optical fiber ribbon according to claim 1, wherein
the ratio of the longest length to the shortest length in the cross section is in a range of 1.07 to 1.14.

3. The optical fiber ribbon according to claim 1, wherein
the shortest length in the cross section is a length in a direction along a disposition direction of the plurality of single-core coated optical fibers.

4. The optical fiber ribbon according to claim 1, further comprising:
a separation portion that is disposed between the adjacent single-core coated optical fibers and separates the adjacent single-core coated optical fibers, wherein
the number of the plurality of single-core coated optical fibers is 12, and
the plurality of connection portions are disposed in such a way that two or more of a plurality of the separation portions are disposed between adjacent connection portions among the plurality of connection portions in an arrangement direction of the plurality of single-core coated optical fibers.

5. A method for producing an optical fiber ribbon, the method comprising:
disposing a plurality of single-core coated optical fibers in parallel;
applying an uncured photocurable resin to the plurality of single-core coated optical fibers to form an uncured tape layer, the uncured photocurable resin being applied in a tape shape;
forming a plurality of connection portions that each partially connect adjacent single-core coated optical fibers among the plurality of single-core coated optical fibers and a separation portion that separates the adjacent single-core coated optical fibers, the forming being performed by rotating a rotary blade with respect to the uncured tape layer or inserting and pulling out a needle with respect to the uncured tape layer; and
curing the uncured tape layer by irradiating the uncured tape layer with light, wherein
in the forming the plurality of connection portions and the separation portion, a distance between the rotary blade or the needle and each of the plurality of single-core coated optical fibers is in a range of 0 to 10 µm.

6. The method according to claim 5, wherein
in the forming the plurality of connection portions and the separation portion, the distance between the rotary blade or the needle and each of the plurality of single-core coated optical fibers is in a range of 0 to 5 µm.
